# EUROPEAN PATENT APPLICATION

(11) **EP 3 902 062 A1**
(43) Date of publication of application: **27.10.2021**
(21) Application number: 19901098.4
(22) Date of filing: 19.12.2019
(51) Int. Cl.: H01Q 3/24, H01Q 21/29, H01Q 1/22

(54) **ANTENNA SYSTEM, MOBILE TERMINAL, AND ANTENNA SYSTEM SWITCHING METHOD**

(30) Priority: 21.12.2018 CN 201811574074
(71) Applicant: Oneplus Technology (Shenzhen) Co., Ltd., Shenzhen, Guangdong 518000 (CN)
(72) Inventor: ZHONG, Yongwei, Shenzhen, Guangdong 518000 (CN); GU, Jiangbo, Shenzhen, Guangdong 518000 (CN); ZHOU, Changwen, Shenzhen, Guangdong 518000 (CN)
(74) Representative: De Arpe Tejero, Manuel
(86) International application number: PCT/CN2019/126682
(87) International publication number: WO 2020/125720

(57) **Abstract**

Disclosed are an antenna system, a mobile terminal, and an antenna system switching method. The antenna system includes: at least one switch and a plurality of antenna units; wherein each of the at least one switch is configured to switch connection states of the plurality of antenna units to cause at least one of the plurality of antenna units in a connected state to generate beams and perform scanning in space. By virtue of the antenna system, the mobile terminal and the switching method of the antenna system provided in the present disclosure, the switch is used to switch the connection states of the antenna units so that the antenna units in the connected state can generate beams and thus perform scanning in space, effectively reducing the use of related components such as phase shifters, reducing feed losses and the number of beams, thereby reducing costs and reducing scanning periods and response time.

## Description

The present application claims priority of Chinese Patent Application No. CN 201811574074.0, in the title of "ANTENNA SYSTEM, MOBILE TERMINAL, AND ANTENNA SYSTEM SWITCHING METHOD", filed on December 21, 2018.

### TECHNICAL FIELD

The present disclosure relates to the field of antenna technologies, and in particular to an antenna system, a mobile terminal, and an antenna system switching method.

### BACKGROUND

An antenna is a device installed on a mobile phone to receive and transmit signals from a transceiver. With the rapid development of the communications industry, the information transmission rate continues to increase, and the requirements for antenna performance are getting higher and higher. The proposals of technologies such as MIMO, beam forming, carrier aggregation and 5G have posed new challenges for antenna design, especially for mobile phone antennas. The mobile phone antennas are required to achieve the highest possible antenna efficiency and wide bandwidth in a very narrow headroom.

The fifth generation (5G) communication technology includes a millimeter wave frequency band (24250MHZ - 52600MHZ), which may be extended to higher frequency bands. To overcome the disadvantage of high electromagnetic wave propagation loss in the millimeter wave frequency band, an antenna array is adopted in the 5G millimeter wave frequency band to meet peak effective isotropic radiated power (Peak EIRP) and spatial coverage requirements of the 3GPP standard.

To overcome the shortcomings of the narrow beam of the antenna array, beam scanning technology is applied to improve the spatial coverage of the beam. The beam scanning technology refers to an algorithm strategy and a related hardware architecture of the antenna system with beam scanning capability to control the beam direction, and it is the key technology for the antenna array to realize the beam scanning. The beam scanning technology directly affects the performance of the beam coverage, response time, multi-target capability, etc. The beam scanning technology also puts forward corresponding requirements for the hardware, which also affects the hardware cost.

A current 5G millimeter wave antenna module encapsulates an antenna array and a radio frequency chip. The radio frequency chip realizes the feeding function required for beam scanning, the feeding function including power amplification, amplitude weighting and phase shifting functions. The use of phase shifting and excitation amplitude enhancement methods for beam scanning has two main problems: one is that the number of related components such as phase shifters is large, increasing the hardware cost and the space area occupied by the device; the other is that the number of beams is large and the beam is narrower making the scan period larger, with poorer response time and increased power consumption.

### SUMMARY OF THE DISCLOSURE

Therefore, reducing the use of related components such as phase shifters and reducing the number of beams has become a pressing problem for those skilled in the art.

In view of the above problems, the purpose of the embodiments of the present disclosure is to provide an antenna system, a mobile terminal and an antenna system switching method to solve the deficiencies of the prior art.

In a first aspect, the present disclosure provides an antenna system, comprising:
at least one switch and a plurality of antenna units;
wherein each of the at least one switch is configured to switch connection states of the plurality of antenna units to cause at least one of the plurality of antenna units in a connected state to generate beams and perform scanning in space.

In a second aspect, the present disclosure provides a mobile terminal, comprising a radio frequency processor and the above antenna system;
the radio frequency processor is configured to control the at least one switch to switch the connection states of the plurality of antenna units to cause the at least one of the plurality of antenna units in the connected state to generate beams and perform scanning in space.

In a third aspect, the present disclosure provides an antenna system switching method applied to the above mobile terminal, the method including:
obtaining a radio frequency signal; and
controlling the at least one switch to switch the connection states of the plurality of antenna units to cause the at least one of the plurality of antenna units in the connected state to generate beams and perform scanning in space.

In a fourth aspect, the present disclosure provides an antenna system switching apparatus, applied to the above mobile terminal and including:
an obtaining module, configured to obtain a radio frequency signal; and
a switching module, configured to control the switch to switch the connection states of the plurality of antenna units according to the radio frequency signal, such that the antenna units in the connection state generate beams and perform scanning in space.

In a fifth aspect, the present disclosure provides a computer-readable storage medium storing the antenna system switching method.

The technical solutions provided by embodiments of the present disclosure may include the following beneficial effects.

By virtue of the antenna system, the mobile terminal and the switching method of the antenna system provided in the embodiments of the present disclosure, the connection states of the plurality of antenna units is switched by the switch, and functions such as phase shifting and amplitude weighting are substituted by switching in order to cause the antenna units in the connected state to generate beams and perform scanning in space, and the use of relevant components such as phase shifters is effectively reduced, and feed losses and the number of beams are reduced, thereby reducing the cost and the scanning period and response time, in a substantially the same performance as that of beam scanning by phase shifting.

Other features and advantages of the present disclosure will be set forth in the subsequent specification, and, in part, become apparent from the specification or are understood by implementing the present disclosure. The objects and other advantages of the present disclosure are realized and obtained in the structure as specifically indicated in the specification, the claims, and the accompanying drawings.

In order to make the foregoing objects, features and advantages of the present disclosure more apparent and understandable, the preferred embodiments are hereinafter described in detail, together with the accompanying drawings, as follows.

### BRIEF DESCRIPTION OF THE DRAWINGS

In order to more clearly describe the technical solutions in the embodiments of the present disclosure, the following will briefly introduce the drawings required in the description of the embodiments. Obviously, the drawings in the following description are only some embodiments of the present disclosure. For a person skilled in the art, other drawings can be obtained based on these drawings without creative work.
FIG. 1 is a structural schematic view of an antenna system according to an embodiment of the present disclosure.
FIG. 2 is a structural schematic view of an antenna system according to another embodiment of the present disclosure.
FIG. 3 is a structural schematic view of an antenna system according to further another embodiment of the present disclosure.
FIG. 4 is a structural schematic view of an antenna unit according to an embodiment of the present disclosure.
FIG. 5 is a schematic view of a cumulative distribution curve of EIRP using a phase shifting method for beam scanning according to an embodiment of the present disclosure.
FIG. 6 is a schematic view of a cumulative distribution curve of EIRP using a switching method for beam scanning according to an embodiment of the present disclosure.
FIG. 7 is a structural schematic view of an antenna system according to further another embodiment of the present disclosure.
FIG. 8 is a schematic view of a cumulative distribution curve of EIRP using a phase shifting method for beam scanning according to another embodiment of the present disclosure.
FIG. 9 is a structural schematic view of a mobile terminal according to an embodiment of the present disclosure.
FIG. 10 is a flowchart of an antenna system switching method according to an embodiment of the present disclosure.
FIG. 11 is a structural schematic view of an antenna system switching apparatus according to an embodiment of the present disclosure.

### Symbol description of main components:

10-antenna system; 11-antenna unit; 111-antenna; 1111-dipole antenna; 1112-patch antenna; 112-antenna array; 12-switch; 121-sub-switch; 13-control unit;
20-RF processor;
500-antenna system switching apparatus; 510-obtaining module; 520-switching module.

### DETAILED DESCRIPTION

The technical solutions in the embodiments of the present disclosure will be clearly and completely described below in connection with the accompanying drawings in the embodiments of the present disclosure. It is clear that the embodiments described are only a portion of the embodiments of the present disclosure, and not all of them. Generally the components of the embodiments of the present disclosure described and illustrated in the accompanying drawings herein can be arranged and designed in a variety of different configurations. Accordingly, the following detailed description of the embodiments of the present disclosure provided in the accompanying drawings is not intended to limit the scope of the present disclosure for which protection is claimed, but only to indicate selected embodiments of the present disclosure. Based on the embodiments of the present disclosure, all other embodiments obtained by those skilled in the art without creative work fall within the scope of the present disclosure.

Some embodiments of the present disclosure are described in detail below in conjunction with the accompanying drawings. The following embodiments and features in the embodiments can be combined with each other without conflict.

### Embodiment 1

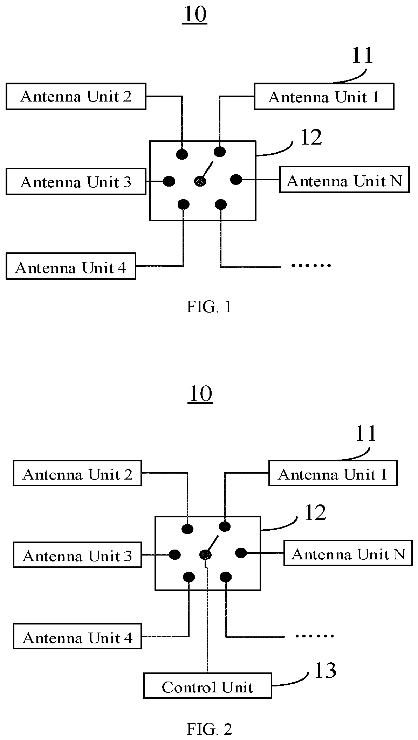

As shown in FIG. 1, the antenna system 10 includes a plurality of antenna units 11 and a switch 12.

The switch 12 is configured to switch connection states of the plurality of antenna units 11, such that the antenna unit(s) 11 in the connected state may generate beams and perform beam scanning in space.

In specific implementation, the antenna system 10 is further arranged with the switch 12. All the antenna units 11 are electrically connected to the switch 12, and the switch 12 is electrically connected to a processor. According to a radio frequency (RF) signal sent by a radio frequency processor, the switch 12 is controlled to close a branch corresponding to a certain antenna unit 11 to realize the connection between the radio frequency processor and the certain antenna unit 11, such that the antenna unit 11 in the connected state may generate beams and perform beam scanning in space to obtain a transmitted electromagnetic wave signal. Each time the switch 12 is closed, the radio frequency processor may be electrically connected to one antenna unit 11, and the connection between the other antenna units 11 and the radio frequency processor is disconnected, such that a time-sharing operation of all the antenna units 11 may be realized, increasing the beam scanning speed and reducing the beam scanning period.

Further, each of the plurality of antenna units 11 includes a plurality of single antennas; or each of the plurality of antenna units 11 is an antenna array including a plurality of antennas; or each of the plurality of antenna units 11 includes at least one single antenna and the antenna array.

Specifically, the antenna may be a patch antenna or a dipole antenna, etc. The antenna array may be a patch antenna array or a dipole antenna array, etc.

Further, the switch 12 may be a single-pole N-throw switch, where N depends on the number of the antenna units 11. Each time the connection state of one antenna unit 11 is switched through the switch 12, the antenna unit 11 in the connected state is connected to the radio frequency processor, and the connection between other antenna units 11 and the radio frequency processor is disconnected, such that the connected antenna unit 11 may generate beams and perform beam scanning in space.

Further, the antenna system 10 may also include a plurality of switches 12, and each antenna unit 11 corresponds to a switch 12. Each switch 12 is a single-pole single-throw switch and controls the connection between a corresponding antenna unit 11 and the radio frequency processor.

In specific implementation, the radio frequency processor controls a corresponding switch 12 to close according to the radio frequency signal, such that the antenna unit 11 corresponding to the switch 12 is connected to the radio frequency processor, and the connected antenna unit 11 may generate beams, thereby scanning the electromagnetic wave signal in space.

Further, the switch 12 may be an independent switching apparatus, or a switching apparatus in other components, or a full combination of the above.

### Embodiment 2

As shown in FIG. 2, the antenna system 10 further includes a control unit 13. An input end of the control unit 13 is electrically connected to an output end of the radio frequency processor. An output end of the control unit 13 is electrically connected to an input end of the switch 12.

Specifically, after receiving the radio frequency signal transmitted by the radio frequency processor, the control unit 13 is configured to control the switch 12 to switch the connection state of the antenna unit 11 according to the radio frequency signal, such that the antenna unit 11 in the connected state may generate beams.

Further, after receiving the radio frequency signal transmitted by the radio frequency processor, the control unit 13 is configured to control the switch 12 to switch the connection state of the antenna unit 11 according to a preset time interval.

Specifically, the control unit 13 is configured to control the switch 12 to switch the connection state of the connected antenna unit 11 in a time-sharing manner according to the received radio frequency signal and the preset time interval, thereby reducing the use of components such as the phase shifter and a power divider in the feed network, speeding up the scanning period, improving scanning response time and improving battery endurance.

For example, in cases that the antenna system 10 includes an antenna unit A, an antenna unit B, an antenna unit C, and an antenna unit D. The preset time interval is 0.1ms. After the control unit 13 receives the radio frequency signal, the control unit 13 may be configured to firstly control the switch 12 to switch the connection state of the antenna unit A, such that the antenna unit A is in the connected state and generates beams for scanning in the space. After the antenna unit A scans for 0.1ms, the control unit 13 is configured to control the switch 12 to switch the connection state of the antenna unit B, such that the antenna unit B is in the connected state and generates beams for scanning in the space. After the antenna unit B scans for 0.1ms, the control unit 13 is configured to control the switch 12 to switch the connection state of the antenna unit C, such that the antenna unit C is in the connected state and generates beams for scanning in the space. After the antenna unit C scans for 0.1ms, the control unit 13 is configured to control the switch 12 to switch the connection state of the antenna unit D, such that the antenna unit D is in the connected state and generates beams for scanning in the space.

It is to be noted that the preset time interval between every two antenna units 11 that are switched may be different. For example, the control unit 13 is configured to control the switch 12 to switch the connection state of the antenna unit A, such that the antenna unit A is in the connected state and generates beams for scanning in the space. After the antenna unit A scans for 2ms, the control unit 13 is configured to control the switch 12 to switch the connection state of the antenna unit B, such that the antenna unit B is in the connected state and generates beams for scanning in the space. After the antenna unit B scans for 3ms, the control unit 13 is configured to control the switch 12 to switch the connection state of the antenna unit C, such that the antenna unit C is in the connected state and generates beams for scanning in the space. After the antenna unit C scans for 1ms, the control unit 13 is configured to control the switch 12 to switch the connection state of the antenna unit D, such that the antenna unit D is in the connected state and generates beams for scanning in the space.

### Embodiment 3

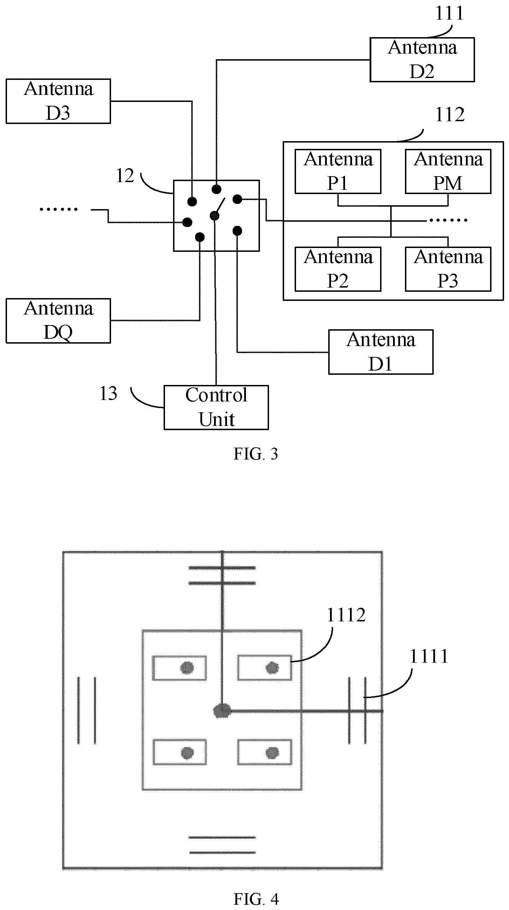

As shown in FIG. 3, the antenna system 10 includes (Q+1) antenna elements 11. The (Q+1) antenna elements 11 include Q antennas 111 and an antenna array 112. The antenna array 112 may include M antennas and does not have the beam scanning capability. That is, the antenna array 112 can only generate one beam.

Specifically, each antenna 111 may be a dipole antenna or a patch antenna.

Switching the beams in the antenna system 10 through the switch 12 replaces phase shifting and amplitude weighting for beam scanning, which has the advantages of fast beam scanning, low hardware cost and small occupied area.

The number of branches of the switch 12 is the number of the antenna units 11. For example, the switch 12 may be a single-pole multi-throw switch including Q+1 branches. Each branch corresponds to one antenna 111 or the antenna array 112. That is, each time the single-pole multi-throw switch is closed, the antenna 111 or antenna array 112 of one branch may be in a connected state.

It is to be noted that the position and distribution of the antenna units 11 and the switch 12 are not limited to the structure shown in FIG. 3, and can be adjusted according to the device distribution of the antenna system 10.

Specifically, as shown in FIG. 4, an example of four dipole antennas 1111 and four patch antennas 1112 will be described. The four patch antennas 1112 are connected by a feed structure to form an antenna array E, and the four dipole antennas 1111 are connected by a feed structure to form an antenna array F, which is configured to improve the Peak EIRP of the antenna system. In cases that beam scanning is performed with phase shifting, with a total of 16 beams when the phase shift accuracy is 3bit, then at least four channels with phase shifting function and four single-pole double-throw (1P2T) switches are required, or eight channels with phase shift function are required.

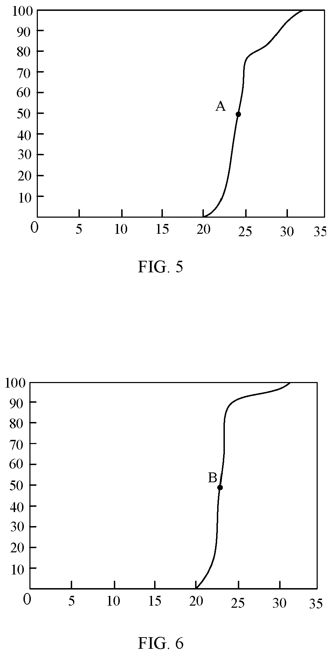

As shown in FIG. 5, FIG. 5 is a schematic view of a cumulative distribution curve of EIRP (EIRP CDF) using a phase shifting method for beam scanning according to an embodiment of the present disclosure. The horizontal coordinate is the antenna gain and the vertical coordinate is the cumulative distribution curve of the antenna gain. Peak EIRP is 31.5 dB and the value of point A (24.15, 49.37) at 50% of the EIRP CDF is 24.15 dB.

As shown in FIG. 4, in cases that 4 patch antennas 1112 are connected by a feed network to form an antenna array, each of 4 dipole antennas 1111 is a single antenna, and a total of 5 beams are generated by passing the patch antenna array and the 4 dipole antennas through a 1P5T (single-pole five-throw) switch. As shown in FIG. 6, FIG. 6 is a schematic view of the EIRP CDF using a switching method for beam scanning. The horizontal coordinate is the antenna gain and the vertical coordinate is the cumulative distribution curve of the antenna gain. Peak EIRP is 31.5 dB and the value of point B (23.7, 50.64) at 50% of the EIRP CDF is 23.7 dB.

As shown in FIGS. 5 and 6, the radiation performance of the antenna system is basically the same through the above-mentioned phase shifting and switching methods. Therefore, this solution can reduce the cost, hardware size, and beam scanning period while ensuring the radiation performance of the antenna system 10.

It is to be noted that each antenna 111 is a single antenna 111, such as a single patch antenna or a dipole antenna. The antenna array 112 is an antenna array 112 including a preset number of the antennas 111 in a preset arrangement.

### Embodiment 4

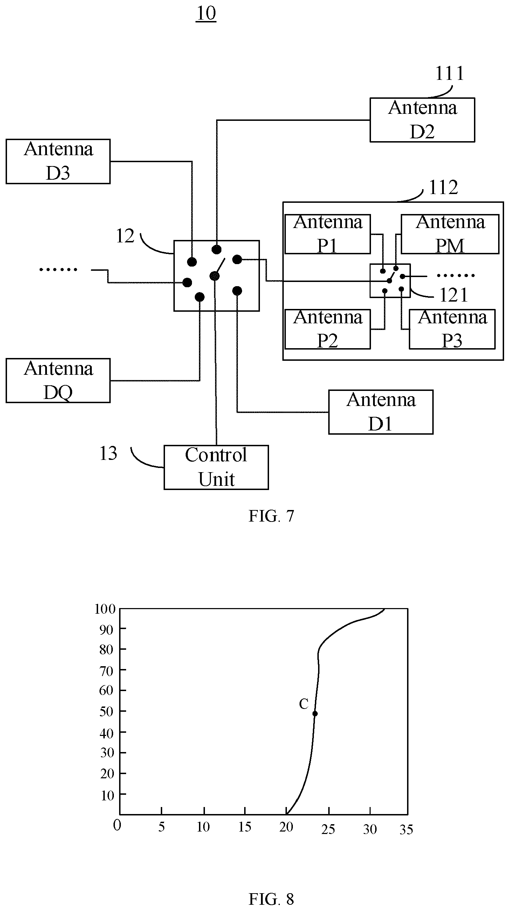

As shown in FIG. 7, the antenna system 10 includes (Q+1) antenna elements 11. The (Q+1) antenna elements 11 include Q antennas 111 and an antenna array 112. The antenna array 112 may include M antennas and have a beam scanning capability. That is, the antenna array 112 can generate multiple beams. The antenna array 112 with beam scanning capability may further include a sub-switch 121. The sub-switch 121 can switch the connection states of the M antennas in the antenna array 112, such that the antenna in the connected state may generates beams, which in turn achieves control of the beam in the antenna array 112, replacing phase shifting and amplitude weighting for beam scanning.

In cases that the antenna unit 11 includes the antenna array 112 including multiple antennas, the antenna system 10 further includes a sub-switch 121. The sub-switch 121 is configured to switch the connection states of the antennas 111 in the antenna array 112 to cause the antennas 111 in the connected state to generate beams.

The number of branches of the switch 12 is the number of the antenna units 11. For example, the switch 12 may be a single-pole multi-throw switch including Q+1 branches. Each branch corresponds to one antenna 111 or the antenna array 112. That is, each time the single-pole multi-throw switch is closed, the one antenna 111 or antenna array 112 of one branch may be in a connected state. The number of branches of the sub-switch 121 is the number of all antennas in the antenna array 112. The sub-switch 121 may be a single-pole multi-throw switch including M branches. Each branch corresponds to one antenna 111. That is, each time the single-pole multi-throw switch is closed, the antenna 111 of one branch may be in a connected state. For example, the sub-switch 121 may be a single-pole multiple throw (1PMT) switch, and each time the sub-switch 121 is closed, one of the M antennas in the antenna array 112 may be in the connected state.

It is to be noted that the position and distribution of the antenna 111 and the antenna array 112 are not limited to the structure shown in FIG. 7, and can be specifically determined according to the application requirements of the antenna system 10.

As shown in FIG. 7, all the antennas 111 and the antenna array 112 are connected to the switch 12, and the connection state of the antenna 111 or the antenna array 112 is switched by the switch. When switching to the antenna array 112, the antenna array 112 switches the connection state of all the antennas in the antenna array 112 through the sub-switch 121, such that the antenna 111 in the connected state in the antenna array 112 may generate beams and perform beam scanning in space. After all the antennas 111 in the antenna array 112 have completed the scanning, other antennas 111 are switched to be connected through the switch 12 to generate other beams.

Specifically, as shown in FIG. 4, an example of four dipole antennas 1111 and four patch antennas 1112 will be described. The four patch antennas 1112 are connected by a feed structure to form an antenna array, which is configured to improve the Peak EIRP of the antenna system. The patch antenna array has the capability to beam scan and produce at least one beam.

In cases that the phase shifting method is used for beam scanning, when the phase shifting accuracy is 3 bit, as shown in FIG. 8, Peak EIRP is 31.5 dB, and the value of point C (23.9,49.22) at 50% of the EIRP CDF is 23.9 dB.

As shown in FIGS. 5 and 6, the radiation performance of the antenna system is basically the same through the above-mentioned phase shifting and switching methods. Therefore, this solution can reduce the cost, hardware size, and beam scanning period while ensuring the radiation performance of the antenna system 10.

It is to be noted that the switch 12 and the sub-switch 121 may be independent devices, or switch devices in other apparatus, or a full combination of the above.

It is to be noted that the antenna system 10 may also include a power amplifier, a filter, a coupler, an analog-to-digital converter and other devices to work together with all the above-mentioned antennas, antenna arrays, toggle switches, sub-toggle switches, control units, etc., for adjusting the matching of the antenna system to make the antenna system achieve the best antenna performance at a lower cost.

The M, N, and Q are all integers greater than 1.

### Embodiment 5

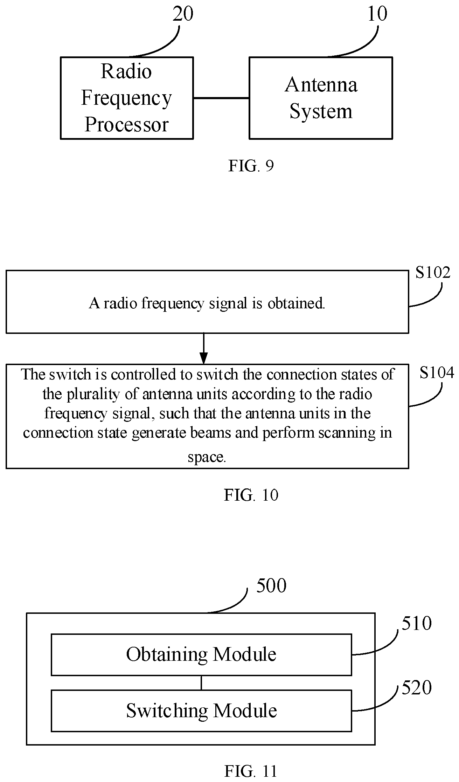

FIG. 9 is a structural schematic view of a mobile terminal according to an embodiment of the present disclosure. The mobile terminal may include a radio frequency processor 20 and the antenna system 10.

The radio frequency processor 20 is configured to control the switch to switch the connection states of the plurality of antenna units according to a radio frequency signal, such that the antenna unit(s) in the connected state may generate beams and perform beam scanning in space.

Further, the radio frequency processor 20 may be also configured to control the switch to switch the connection states of the plurality of antenna units 11 according to a preset time interval and perform a time-sharing operation of the antenna units 11 to reduce the scanning period, reduce the power supply loss, and improve the scanning speed.

The mobile terminal may also include a memory, an input unit, a display unit, a photographing unit, an audio circuit, a wireless fidelity (Wi-Fi) module, a processor, and a power supply. The memory may primarily include a stored program area and a stored data area, wherein the stored program area may store an operating system, at least one application required for the function, and the stored data area may store data created based on the use of the mobile terminal. The input unit may include a touch panel and may include other input devices. The display unit may include a display panel. The camera unit is configured to capture image information within the imaging range. The audio circuit is configured to provide an audio interface between the user and the mobile terminal. The Wi-Fi module may help the user send and receive e-mail, browse the web and access streaming media, etc., and provide the user with wireless broadband Internet access. The processor is the control center of the mobile terminal, and in addition to the above functions, the processor may connect various parts of the entire mobile terminal using various interfaces and lines, by running or executing software programs and/or modules stored in the memory, as well as calling data stored in the memory to perform various functions and process data of the mobile terminal so as to monitor the mobile terminal as a whole. The power supply may be logically connected to the processor through a power management system to realize functions such as managing charging, discharging, and power consumption management through the power management system. Those skilled in the art may understand that the mobile terminal structure illustrated in FIG. 9 does not constitute a limitation of the mobile terminal and may include more or fewer components than illustrated, or a combination of certain components, or a different arrangement of components.

### Embodiment 6

FIG. 10 is a flowchart of an antenna system switching method according to an embodiment of the present disclosure. The antenna system switching method may be applied to the mobile terminal described in the Embodiment 5.

The antenna system switching method may include operations at blocks illustrated in FIG. 10.

At block S102: A radio frequency signal is obtained.

Specifically, the radio frequency processor receives the radio frequency signal transmitted by the mobile master processor.

At block S102: The switch is controlled to switch the connection states of the plurality of antenna units according to the radio frequency signal, such that the antenna units in the connection state generate beams and perform scanning in space.

Specifically, the radio frequency processor controls the switch to switch to a corresponding antenna unit according to the radio frequency signal, such that the antenna unit in the connected state generates beams and performs scanning in space.

Specifically, after the radio frequency processor obtains the radio frequency signal, the radio frequency processor may send the radio frequency signal to the control unit, and the control unit controls the switch to switch the connection states of all antenna units in a time-sharing manner according to the radio frequency signal, such that the antenna unit in the connected state generates beams and performs scanning in space, and the antenna unit in the connected state may generate corresponding beams such that the antenna unit can work in a time-sharing manner. Under the condition that the performance of beam scanning by phase shifting is basically the same, the cost and the number of beams are reduced, and the scanning period is reduced, the scanning speed is increased.

### Embodiment 7

FIG. 11 is a structural schematic view of an antenna system switching apparatus according to an embodiment of the present disclosure. The switching apparatus 500 of the antenna system corresponds to the antenna system switching method of the Embodiment 6. Any optional options in the Embodiment 6 are also applicable to this embodiment, and will not be described in detail here.

The switching apparatus 500 of the antenna system includes an obtaining module 510 and a switching module 520.

The obtaining module 510 is configured to obtain a radio frequency signal.

The switching module 520 is configured to control the switch to switch the connection states of the plurality of antenna units according to the radio frequency signal, such that the antenna units in the connection state generate beams and perform scanning in space.

The embodiment also provides a computer storage medium for storing the computer program used in the antenna system switching method.

In the several embodiments provided in the present disclosure, it should be understood that the disclosed device and method may also be implemented in other ways. The apparatus embodiments described above are only schematic. For example, the flowcharts and structural views in the accompanying drawings show the possible implementations of the architecture, functionality, and operation of the apparatus, method, and computer program product according to multiple embodiments of the present disclosure. In this regard, each block in a flowchart or block diagram may represent a module, program segment or part of code, the module, program segment or part of code containing one or more executable instructions for implementing a defined logical function. It should also be noted that in the implementation as a replacement, the functions indicated in the blocks may also occur in a different order than that indicated in the accompanying drawings. For example, two consecutive blocks can actually be executed in substantially parallel, and they can sometimes be executed in the opposite order, depending on the function involved. Each block in the structure view and/or flowchart, and the combination of blocks in the structure view and/or flowchart, can be implemented with a dedicated hardware-based system that performs the specified function or action, or can be implemented with a combination of dedicated hardware and computer instructions.

In addition, the functional modules or units in the various embodiments of the present disclosure may be integrated together to form an independent part, or each module may exist alone, or two or more modules may be integrated to form an independent part.

The functionality, when implemented in the form of a software function module and sold or used as a stand-alone product, may be stored in a computer readable storage medium. It is understood that the technical solution of the present disclosure, or the part of the technical solution that essentially contributes to the prior art, may be embodied in the form of a software product stored in a storage medium comprising a number of instructions to enable a mobile terminal (which may be a smartphone, a personal computer, a server, or a network device, etc.) to perform all or some of the operations of the method described in the various embodiments of the present disclosure. The storage medium includes: U-disk, mobile hard disk, read-only memory (ROM), random access memory (RAM), disk or CD-ROM, and other medium that can store program code.

The above are only specific implementations of the present disclosure, but the scope of the present disclosure is not limited to this. Those skilled in the art can easily think of changes or substitutions within the technical scope disclosed in the present disclosure, should be covered by the scope of the present disclosure.

## Claims

1. An antenna system, comprising:
at least one switch and a plurality of antenna units;
wherein each of the at least one switch is configured to switch connection states of the plurality of antenna units to cause at least one of the plurality of antenna units in a connected state to generate beams and perform scanning in space.

2. The antenna system according to claim 1, wherein each of the plurality of antenna units comprises a plurality of single antennas; or each of the plurality of antenna units is an antenna array comprising a plurality of antennas; or each of the plurality of antenna units comprises at least one single antenna and the antenna array.

3. The antenna system according to claim 2, wherein each of the plurality of antennas is a patch antenna or a dipole antenna.

4. The antenna system according to claim 1, wherein the number of the at least one switch is one; the switch is a single-pole N-throw switch, and N is the number of plurality of antenna units.

5. The antenna system according to claim 1, wherein the number of the at least one switch is greater than one; each of the plurality of antenna units corresponds to one of the plurality of switches; each of the plurality of switches is a single-pole single-throw switch.

6. The antenna system according to claim 2, wherein one of the plurality of antenna units is the antenna array comprising the plurality of antennas; the antenna system further comprises a sub-switch;
the sub-switch is configured to switch connection states of the plurality of antennas to cause at least one of the plurality of antennas in a connected state to generate beams.

7. The antenna system according to claim 1, further comprising a control unit;
wherein the control unit is configured to, after receiving a radio frequency signal, control the at least one switch to switch the connection states of the plurality of antenna units according to the radio frequency signal.

8. The antenna system according to claim 7, wherein the control unit is further configured to control the at least one switch to switch the connection states of the plurality of antenna units based on a preset time interval according to the radio frequency signal.

9. A mobile terminal, comprising a radio frequency processor and an antenna system;
wherein the radio frequency processor is configured to control at least one switch to switch connection states of a plurality of antenna units to cause at least one of the plurality of antenna units in a connected state to generate beams and perform scanning in space.

10. The mobile terminal according to claim 9, comprising:
at least one switch and a plurality of antenna units;
wherein each of the at least one switch is configured to switch the connection states of the plurality of antenna units to cause at least one of the plurality of antenna units in a connected state to generate beams and perform scanning in space.

11. The mobile terminal according to claim 10, wherein each of the plurality of antenna units comprises a plurality of single antennas; or each of the plurality of antenna units is an antenna array comprising a plurality of antennas; or each of the plurality of antenna units comprises at least one single antenna and the antenna array.

12. The mobile terminal according to claim 11, wherein each of the plurality of antennas is a patch antenna or a dipole antenna.

13. The mobile terminal according to claim 10, wherein the number of the at least one switch is one; the switch is a single-pole N-throw switch, and N is the number of plurality of antenna units.

14. The mobile terminal according to claim 10, wherein the number of the at least one switch is greater than one; each of the plurality of antenna units corresponds to a corresponding switch; each of the plurality of switches is a single-pole single-throw switch.

15. The antenna system according to claim 11, wherein one of the plurality of antenna units is the antenna array comprising the plurality of antennas; the antenna system further comprises a sub-switch;
the sub-switch is configured to switch connection states of the plurality of antennas to cause at least one of the plurality of antennas in a connected state to generate beams.

16. The mobile terminal according to claim 10, further comprising a control unit;
wherein the control unit is configured to, after receiving a radio frequency signal, control the at least one switch to switch the connection states of the plurality of antenna units according to the radio frequency signal.

17. The mobile terminal according to claim 16, wherein the control unit is further configured to control the at least one switch to switch the connection states of the plurality of antenna units based on a preset time interval according to the radio frequency signal.

18. An antenna system switching method, applied to a mobile terminal according to any one of claims 9-17 and comprising:
obtaining a radio frequency signal; and
controlling the at least one switch to switch the connection states of the plurality of antenna units to cause the at least one of the plurality of antenna units in the connected state to generate beams and perform scanning in space.
